# FASCICULE DE BREVET EUROPEEN

(11) **EP 2 156 360 B1**
(45) Date de publication et mention de la délivrance du brevet: **12.01.2011**
(21) Numéro de dépôt: 08760428.6
(22) Date de dépôt: 03.06.2008
(51) Int. Cl.: G06F 21/04, G06F 21/20, H04L 12/22, G06K 7/00, G06K 9/00

(54) **SYSTEME EMBARQUE DE CONTROLE D'ACCES POUR UNE COMMUNICATION DU DOMAINE OUVERT VERS LE DOMAINE AVIONIQUE**
ZUGANGSKONTROLL-ONBOARD-SYSTEM FÜR DIE KOMMUNIKATION VON EINER OFFENEN DOMÄNE IN DIE FLUGTECHNISCHE DOMÄNE
ACCESS CONTROL ONBOARD SYSTEM FOR COMMUNICATION FROM OPEN DOMAIN TO AVIONICS DOMAIN

(30) Priorité: 06.06.2007 FR 0755514
(43) Date de publication de la demande: 24.02.2010
(73) Titulaire: AIRBUS OPERATIONS, 31060 Toulouse (FR)
(72) Inventeur: GENISSEL, Jean-Paul, F-31820 Pibrac (FR)
(74) Mandataire: Ilgart, Jean-Christophe
(86) Numéro de dépôt international: PCT/EP2008/056844
(87) Numéro de publication internationale: WO 2008/148756

(56) Documents cités:
- EP-A- 1 164 766
- WO-A-01/95069
- US-A1- 2006 184 784

## Description

### DOMAINE TECHNIQUE

L'invention concerne un système embarqué de contrôle d'accès pour une communication du domaine ouvert vers le domaine avionique. Ce système peut être embarqué dans un aéronef, par exemple un avion.

### ÉTAT DE LA TECHNIQUE ANTÉRIEURE

Un système d'information embarqué est un système composé de deux « domaines » : le domaine avionique (AW), domaine répondant à des règles de certification bien définies, et le domaine ouvert (OW), domaine basé sur des composants informatiques grand public. Suite à des directives de sécurisation informatique cette communication n'est, aujourd'hui, autorisée que dans un sens du domaine avionique vers le domaine ouvert. Néanmoins le besoin de communiquer dans les deux sens devient nécessaire voire impératif pour l'intérêt du système.

### Le domaine avionique

Le domaine avionique est un domaine dédié aux calculateurs avioniques qui traitent toutes les fonctions avioniques incluant des fonctions critiques telles que les commandes de vol.

Le domaine avionique doit être protégé contre d'éventuelles attaques informatiques afin de pouvoir garantir son intégrité et ainsi garantir la sûreté de fonctionnement. Les équipements avioniques sont développés en accord avec les règles de navigabilité aérienne et les règlements dictés par les services officiels garantissant ainsi la sûreté du vol. Le domaine sécurisé doit être protégé contre des tentatives d'intrusion non contrôlées susceptibles de provenir du domaine ouvert.

Le domaine avionique est dédié à traiter, entre autres :
- tout ce qui est nécessaire pour des opérations immédiates contribuant à l'exploitation opérationnelle de l'avion et à la bonne conduite du vol;
- tout ce qui est nécessaire pour la préparation du vol pour une bonne exploitation opérationnelle;
- certaines acquisitions de données "sensibles" en provenance du sol.

### Le domaine ouvert

Le domaine "ouvert" est un domaine intégrant un serveur d'applications fournissant une capacité d'accueil pour des applications de maintenance, des applications opérationnelles et des applications cabine passagers n'ayant aucun impact sur la sûreté du vol. Un réseau local Ethernet, embarqué dans l'avion, permet les échanges d'informations entre les différents composants du domaine ouvert. Le domaine ouvert peut aussi communiquer, via une communication satellite haut débit, avec un système d'information de la compagnie aérienne basé au sol.

Ce domaine est considéré "ouvert" car il est accessible à tout opérateur. Il est considéré comme non contrôlé, car il fait appel à des composants grand public et à des standards informatiques : réseaux locaux Ethernet, composants logiciels et matériels COTS (Composants COTS: "components off the shelf" ou "Composants sur étagères").

Les éléments de sécurité informatique mis en oeuvre doivent garantir la non propagation d'éventuels virus et/ou attaques en tout genre.

Le domaine "ouvert" apporte:
- des solutions de faible coût, par exemple des solutions du marché, permettant d'alléger la complexité liée à la sécurité, à la sûreté et à la disponibilité;
- un maximum de flexibilité pour l'opérateur pouvant installer ses propres applications ("Third party applications") avec un minimum voire sans implication de l'avionneur, limitant ainsi les coûts et les délais de mise en oeuvre;
- la facilité d'installation d'applications de responsabilité de la compagnie aérienne, répondant à des règles opérationnelles (FAR 121, FAR 145 ...);
- une capacité d'hébergement de fonctions/applications non majeures pour des opérations immédiates.

L'invention a ainsi pour objet de prendre en compte les besoins et les objectifs généraux et spécifiques d'un système d'information embarqué concernant notamment la sécurité des données, la sûreté, les performances, l'installation, la configuration et la certification avion en proposant un système embarqué de contrôle d'accès permettant une communication sécurisée du domaine ouvert vers le domaine avionique, de façon à permettre des communications bidirectionnelles entre le domaine avionique et le domaine ouvert.

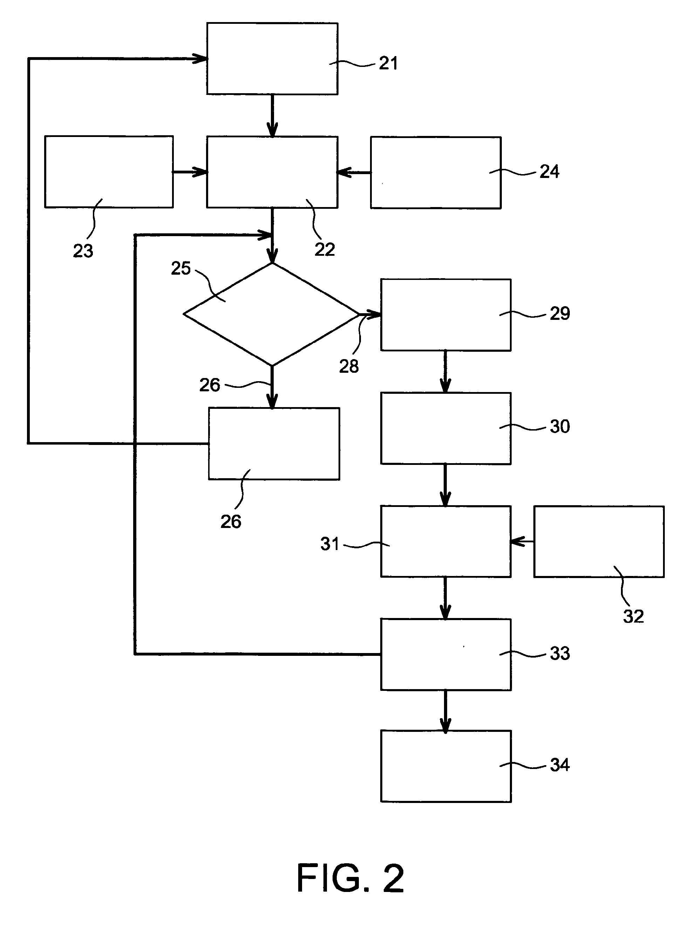

Le document US 2006/184784 A1 décrit un système de contrôle d'accès (fig. 3: 310, 340 (C), 320) à un système d'information, pour une communication du domaine ouvert (fig. 3: 370, 350 (A)) vers un domaine protégé (fig. 3: 360, 330 (B)). Le système comprend un dispositif de sécurité (fig. 3: 310, 340 (C), 320) comprenant: un ensemble de deux commutateurs d'accès (fig. 2: 230 inclus dans fig. 3: 310 et 320) à chacun des deux domaines, fonctionnant comme un sas électronique (l'ensemble empêchant toute communication directe entre les deux domaines tout en permettant le transfert d'un domaine vers l'autre); un contrôleur (ordinateur 340 (C), qui, dans la fig. 3, joue le rôle d'un des ordinateurs 110 (A) ou 120 (B) dans le par. 46) qui commande l'ouverture de ces deux commutateurs pendant des durées fonction d'une programmation (par. 46: "The data transference may be programmed ... on demand."); un module d'acquisition (310), mise en mémoire tampon (fig. 2: 220) de données issues du domaine ouvert et transmission au domaine protégé (communication unidirectionnelle (asymétrique) (par. 46)); un module d'acquisition (320) depuis le domaine ouvert et de mise en mémoire tampon (fig. 2: 220); et un module de contrôle de données (340 (C)) qui définit des critères de filtrage (par. 55) auxquels tous les échanges entre mémoires tampon sont soumis. Ainsi le système permet une communication sécurisée du domaine ouvert vers le domaine protégé. Les communications bidirectionnelles entre les deux domaines sont obtenues par le dispositif de sécurité, communiquant de manière bidirectionnelle avec chaque domaine à travers les commutateurs respectifs.

### EXPOSÉ DE L'INVENTION

L'invention concerne un système embarqué de contrôle d'accès à un système d'information, embarqué à bord d'un aéronef, comprenant un domaine avionique répondant à des règles de certification bien définies, et un domaine ouvert basé sur des composants grand public et accessible à tout opérateur, ces deux domaines étant pour des raisons de sécurité reliés entre eux par une liaison unidirectionnelle du domaine avionique vers le domaine ouvert, **caractérisé en ce qu'**il comprend :
- des moyens d'authentification d'un opérateur,
- un dispositif de sécurité comprenant :
   - un ensemble de deux commutateurs d'accès à chacun de ces deux domaines, fonctionnant comme un sas électronique,
   - un contrôleur qui commande l'ouverture de ces deux commutateurs pendant des durées fonction du profil de l'opérateur,
   - un module d'acquisition, mise en mémoire tampon de données issue du domaine ouvert et transmission au domaine avionique,
   - un module d'acquisition depuis le domaine ouvert et de mise en mémoire tampon,
   - un module de contrôle de données qui définit des critères de filtrage auxquels touts les échanges entre mémoires tampon sont soumis,
      de manière à permettre une communication sécurisée du domaine ouvert vers le domaine avionique et ainsi permettre des communications bidirectionnelles entre ces deux domaines.

Dans une première variante les moyens d'authentification de l'opérateur comportent des moyens de lecture de carte électronique, des moyens biométriques ou des moyens de lecture de code.

Dans une seconde variante, les moyens d'authentification de l'opérateur comportent une liaison sécurisée entre l'avion et le sol permettant à un opérateur situé au sol de s'authentifier, cette liaison étant alors reliée au contrôleur.

Avantageusement, les commutateurs sont des commutateurs matériels.

Le module de contrôle peut comprendre des mécanismes de protection dans les couches réseau, transport et application du modèle OSI. Avantageusement, le module de contrôle comprend des moyens de cryptage. Le module de contrôle peut être configuré par une table de filtrage des données.

Avantageusement, les protocoles utilisés dans chacun de ces deux domaines avionique et ouvert sont différents et participent à la sécurisation des l'échange de données entre ces deux domaines.

### BRÈVE DESCRIPTION DES DESSINS

La figure 1 illustre le système embarqué de contrôle d'accès de l'invention.
La figure 2 est un organigramme illustrant un exemple de fonctionnement du système embarqué de contrôle d'accès de l'invention.

### EXPOSÉ DÉTAILLÉ DE MODES DE RÉALISATION PARTICULIERS

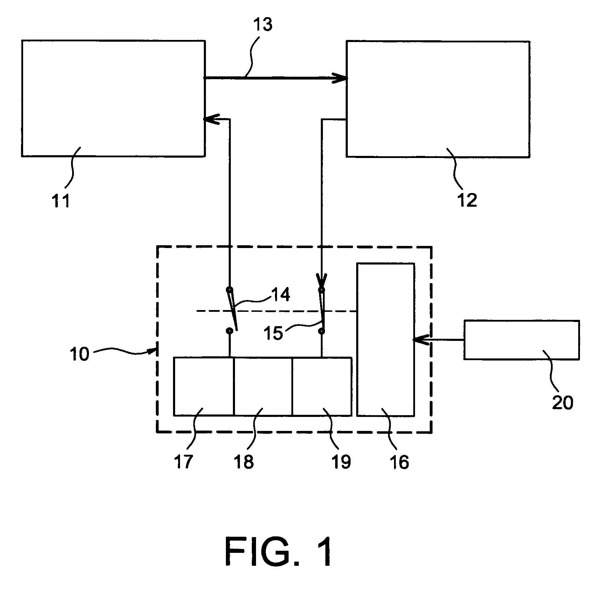

Comme illustré sur la figure 1, le système embarqué de contrôle d'accès selon l'invention est connecté entre le domaine avionique 11 et le domaine ouvert 12. Ces deux domaines 11 et 12 sont classiquement reliés par une liaison unidirectionnelle 13 dans le sens domaine avionique 11 vers domaine ouvert 12.

Le système de l'invention comprend :
- un dispositif de sécurité 10 comprenant :
   - des commutateurs matériels 14 et 15 d'accès à chacun de ces deux domaines,
   - un contrôleur 16,
   - un module 17 d'acquisition, mise en mémoire tampon et transmission au domaine avionique 11,
   - un module de contrôle de données (« firewall ») 18, et
   - un module 19 d'acquisition depuis le domaine ouvert 12 et de mise en mémoire tampon,
- des moyens 20 d'authentification de l'opérateur.

Dans une première variante, les moyens d'authentification de l'opérateur correspondent à un dispositif d'authentification, qui comprend par exemple des moyens de lecture de carte électronique, des moyens biométriques, ou des moyens de lecture de code.

Dans une seconde variante, les moyens d'authentification de l'opérateur comportent une liaison sécurisée entre l'avion et le sol permettant à un opérateur situé au sol de s'authentifier, cette liaison étant alors reliée au contrôleur 16.

Le système embarqué de contrôle d'accès de l'invention est apparenté à un « sas électronique » comportant un commutateur d'accès à chaque domaine avionique et ouvert. Une donnée ne peut passer d'un domaine à l'autre que lorsque le commutateur d'accès au domaine opposé est fermé, ce qui évite tout lien physique permanent entre les deux domaines et permet d'obtenir des communications protégées entre ces deux domaines.

L'ouverture et la fermeture des deux commutateurs matériels (« hardware ») 14 et 15 est contrôlée par le dispositif de sécurité 10 après authentification de l'opérateur. Ce dispositif de sécurité 10 permet une liaison sécurisée dans le sens inverse de la liaison 13, du domaine ouvert 12 vers le domaine avionique 11.

Le volume de données transmis est déterminé sur la capacité de mise en mémoire tampon des deux modules d'acquisition, mise en mémoire tampon et transmission 17 et 19.

Grâce au dispositif de sécurité 10 la liaison du domaine ouvert vers le domaine avionique est toujours ouverte, ce qui interdit un accès permanent au domaine avionique, limitant voire interdisant l'accès à tout intrus ayant l'intention de nuire.

Ce dispositif de sécurité 10 présente les fonctionnalités suivantes.

### Contrôleur 16

Le contrôleur 16 prend en compte l'authentification de l'opérateur et définit les règles du dispositif de sécurité 10 qui fonctionne en fonction du profil de l'opérateur. Le contrôleur 16 configure le dispositif de sécurité 10 en fonction des opérateurs pour réaliser la connexion entre le domaine ouvert et le domaine avionique. En particulier, le contrôleur 16 attribue une fenêtre de temps, fonction du profil de l'opérateur, pendant laquelle la communication est possible. Pour cela, il commande l'ouverture des commutateurs d'accès 14 et 15 pendant des durées fonction du profil de l'opérateur déterminé lors de l'authentification de celui-ci.

### Module d'accès 19

Le module 19 d'accès au domaine ouvert 12 tient compte de la mise en oeuvre d'un premier protocole et réalise la mise en mémoire tampon des données en provenance du domaine ouvert 12.

### Module d'accès 17

Le module 17 d'accès au domaine avionique 11 tient compte de la mise en oeuvre d'un second protocole et réalise la mise en mémoire tampon des données en provenance du domaine ouvert 12 (via le module de contrôle 18) en vue de leur transmission vers le domaine avionique 11.

### Module de contrôle 18

Le module de contrôle 18 fournit une protection entre le domaine ouvert 12 et le domaine avionique 11. Il peut notamment remplir une fonction pare-feu (« firewall » en anglais). Pour cela, il peut être configuré par une table de filtrage de données chargée en définissant des critères de filtrage, auxquels tous les échanges entre mémoires tampon sont alors soumis. Ce module de contrôle 18 permet de vérifier l'intégrité des données.

Le niveau de sécurité à appliquer est déterminé en fonction du type de données à transférer. Des exemples de risques à prendre en compte concernent notamment des attaques par des intrus, l'espionnage commercial, la divulgation accidentelle de données compagnies (utilisateurs, employés et données entreprise) et des attaques refus de service.

Le premier et le second protocoles sont choisis parmi les protocoles bien connus de l'homme de métier. Ils peuvent être différents et participer ainsi à la sécurisation de l'échange de données entre le domaine ouvert 12 et le domaine avionique 11.

Un tel module de contrôle 18 comprend classiquement des mécanismes de protection pour les couches suivantes du modèle OSI (« Open System Interconnection ») :
- couche réseau,
- couche transport,
- couche application.

Il peut utiliser un cryptage pour permettre confidentialité, authentification et amélioration de l'intégrité.

### Commutateurs d'accès 14 et 15

L'ouverture et la fermeture des commutateurs d'accès 14 et 15 sont gérées par le contrôleur 16. Ils fonctionnent comme un sas électronique, où une donnée ne peut passer d'un domaine à l'autre que lorsque le commutateur du domaine opposé est fermé, ce qui interdit toute liaison physique entre les deux domaines.

Dans un processus de transmission de données entre le domaine ouvert 12 et le domaine avionique 11, on a les étapes suivantes :
- Authentification de l'opérateur
   Le contrôleur 16 acquiert les données transmises par le dispositif d'authentification de l'opérateur 20 et alloue les droits en fonction du profil de l'utilisateur, avec :
   - fermeture du commutateur 15 d'accès au domaine ouvert,
   - initialisation du premier protocole,
   - mise en mémoire tampon des données.
- Mise en mémoire tampon des données
   - mise en mémoire tampon, dans le module 19 préalablement vidé de toutes données antérieures, de la totalité des données candidates à être transmises,
   - ouverture du commutateur 15 d'accès au domaine ouvert.
- Contrôle/filtrage de données
   - transmission des données mises en mémoire tampon vers le module de contrôle 18,
   - filtrage des données en fonction de critères de filtrage déterminés.
- Mise en mémoire tampon des données autorisées
   - vérification de l'état ouvert et fermé respectivement des commutateurs 14 et 15 d'accès aux domaines avionique 11 et ouvert 12,
   - transmission des données vers le module de mise en mémoire tampon 17 préalablement vidé de toutes données antérieures,
   - effacement des mémoires du module 19,
   - fermeture du commutateur 14 d'accès au domaine avionique (le commutateur 15 d'accès au domaine ouvert étant ouvert),
   - initialisation du second protocole pour transfert des données du module d'acquisition 17 vers la domaine avionique.

La figure 2 est un organigramme illustrant un exemple de fonctionnement du système de l'invention.

Cet organigramme comprend les étapes suivantes :
- une étape 21 d'initialisation de configuration du système de l'invention ; le commutateur 15 d'accès au domaine ouvert 12 étant ouvert et le commutateur 14 d'accès au domaine avionique 11 étant fermé,
- une étape 22 de mise à jour du système de l'invention recevant une configuration de contrôle d'accès 23 et une authentification ou des règles de commande d'accès 24,
- un test 25 de changement de configuration du système de l'invention avec
   - une sortie 26 commutateur 15 ouvert et commutateur 14 fermé suivie d'une étape 27 d'initialisation du second protocole (côté domaine avionique) et retour à l'étape 21,
   - une sortie 28 commutateur 15 fermé et commutateur 14 ouvert suivie de
      * une étape 29 d'initialisation du premier protocole (côté domaine ouvert),
      * une étape 30 de mise en mémoire tampon des données et d'acquisition de données du domaine ouvert,
      * une étape 31 de filtrage de données (fonction « firewall ») recevant une configuration 32 de filtrage de données,
      * une étape 33 de mémorisation de données valides, avec retour avant l'étape 25 de changement de configuration, et
      * une étape 34 d'effacement de mémoire tampon.

Pour réaliser un transfert de données entre le domaine ouvert 12 et le domaine avionique 11 :
- Dans un premier temps, on passe par la sortie 28 du test 25.
- Dans un second temps, on passe par la sortie 26 de ce même test 25.

## Revendications

1. Système embarqué de contrôle d'accès à un système d'information, embarqué à bord d'un aéronef, comprenant un domaine avionique (11) répondant à des règles de certification bien définies, et un domaine ouvert (12) basé sur des composants grand public et accessible à tout opérateur, ces deux domaines étant pour des raisons de sécurité reliés entre eux par une liaison unidirectionnelle (13) du domaine avionique vers le domaine ouvert, le système comprenant :
- des moyens d'authentification d'un opérateur (20),
- un dispositif de sécurité (10) comprenant :
• un ensemble de deux commutateurs (14, 15) d'accès à chacun de ces deux domaines, fonctionnant comme un sas électronique,
• un contrôleur (16) qui commande l'ouverture de ces deux commutateurs (14, 15) pendant des durées fonction du profil de l'opérateur,
• un module d'acquisition, mise en mémoire tampon de données issues du domaine ouvert et transmission au domaine avionique (17),
• un autre module d'acquisition depuis le domaine ouvert et de mise en mémoire tampon (19),
• un module de contrôle de données (18) qui définit des critères de filtrage auxquels tous les échanges entre les mémoires tampon sont soumis,
de manière à permettre une communication sécurisée du domaine ouvert (12) vers le domaine avionique (11) et ainsi permettre des communications bidirectionnelles entre ces deux domaines.

2. Système selon la revendication 1, dans lequel les moyens d'authentification de l'opérateur (20) comprennent des moyens de lecture de carte électronique, ou des moyens biométriques, ou des moyens de lecture de code.

3. Système selon la revendication 1, dans lequel les moyens d'authentification de l'opérateur (20) comprennent une liaison sécurisée entre l'aéronef et le sol permettant à un opérateur situé au sol de s'identifier.

4. Système selon la revendication 1, dans lequel les commutateurs (14, 15) sont des commutateurs matériels.

5. Système selon la revendication 1, dans lequel le module de contrôle (18) comprend des mécanismes de protection dans les couches réseau, transport et application du modèle OSI.

6. Système selon la revendication 1, dans lequel le module de contrôle (18) comprend des moyens de cryptage.

7. Système selon la revendication 1, dans lequel le module de contrôle (18) est configuré par une table de filtrage des données.

8. Système selon la revendication 1, dans lequel les protocoles utilisés dans chacun de ces deux domaines avionique et ouvert sont différents et participent à la sécurisation des l'échange de données entre ces deux domaines.

9. Système selon l'une quelconque des revendications précédentes, dans lequel l'aéronef est un avion.

10. Aéronef mettant en oeuvre un système selon l'une quelconque des revendications 1 à 8.

## Claims

1. Onboard access control system to an information system onboard an aircraft, comprising an avionics domain (11) satisfying clearly defined certification rules, and an open domain (12) based on general public components accessible to all operators, these two domains being connected to each other through a single-directional link (13) for security reasons, from the avionics domain to the open domain, the system comprising :
- operator authentication means (20),
- a security device (10) comprising:
• a set of two access switches (14, 15) controlling access to each of these two domains, operating like an electronic lock,
• a controller (16) that controls opening of these two switches (14, 15) for durations that depend on the operator's profile,
• a module (17) for acquisition, putting data originating from the open domain into buffer memory and transmission to the avionics domain,
• another acquisition module acquiring data from the open domain and putting it into buffer memory (19),
• a data control module (18) that defines filter criteria applicable to all exchanges between the buffer memories,
to enable secure communication from the open domain (12) to the avionics domain (11) and thus allow two-directional communications between these two domains.

2. System according to claim 1, in which the operator authentication means (20) comprise means of reading electronic cards or biometric means or code reading means.

3. System according to claim 1, in which the operator authentication means (20) comprise a secure link between the aircraft and the ground to allow an operator on the ground to identify himself.

4. System according to claim 1, in which switches (14, 15) are hardware switches.

5. System according to claim 1, in which the control module (18) includes protection mechanisms in the network, transport and application layers of the OSI model.

6. System according to claim 1, in which the control module (18) includes encryption means.

7. System according to claim 1, in which the control module (18) is configured by a data filtering table.

8. System according to claim 1, in which the protocols used in each of these two avionics and open domains are different and participate in increasing the security of data exchanges between these two domains.

9. System according to any one of the previous claims, in which the aircraft is a plane.

10. Aircraft using a system according to any one of claims 1 to 8.

## Patentansprüche

1. On-Board-System zur Zugangskontrolle für ein Informationssystem an Bord eines Luftfahrzeugs, umfassend eine Avionik-Domäne (11), die auf genau definierte Zertifizierungsregeln anspricht, und eine offene Domäne (12), die auf allgemein öffentlichen und jedem Operator zugänglichen Komponenten beruht, wobei diese zwei Domänen aus Sicherheitsgründen durch eine unidirektionale Verbindung (13) von der Avionik-Domäne zu der offenen Domäne miteinander verbunden sind, wobei das System umfasst:
- Mittel zur Authentifizierung eines Operators (20),
- eine Sicherheitsvorrichtung (10), umfassend:
• eine Gruppe aus zwei Schaltern (14, 15) zum Zugang zu jeder dieser zwei Domänen, die als elektronische Schleuse dient,
• eine Kontrollvorrichtung (16), die die Öffnung dieser zwei Schalter (14, 15) über Zeiträume entsprechend dem Profil des Operators steuert,
• ein Modul zum Empfangen, Pufferspeichern von aus der offenen Domäne stammenden Daten und zur Übertragung zur Avionik-Domäne (17),
• ein weiteres Modul zum Empfangen von der offenen Domäne und zur Pufferspeicherung (19),
• ein Datenkontrollmodul (18), das die Filterkriterien festlegt, denen jeder Austausch zwischen den Pufferspeichern unterliegt,
so dass eine gesicherte Kommunikation von der offenen Domäne (12) zur Avionik-Domäne (11) möglich ist und so, dass bidirektionale Kommunikation zwischen diesen zwei Domänen möglich ist.

2. System nach Anspruch 1, wobei die Mittel zur Authentifizierung des Operators (20) Mittel zum elektronischen Kartenlesen oder biometrische Mittel oder Code-Lesermittel umfassen.

3. System nach Anspruch 1, wobei die Mittel zur Authentifizierung des Operators (20) eine gesicherte Verbindung zwischen dem Luftfahrzeug und dem Boden umfassen, die es möglich machen, dass sich ein am Boden befindlicher Operator identifiziert.

4. System nach Anspruch 1, wobei die Schalter (14, 15) materielle Schalter sind.

5. System nach Anspruch 1, wobei das Kontrollmodul (18) Schutzmechanismen in der Netzebene, der Transportebene und der Anwendungsebene des OSI-Modells umfasst.

6. System nach Anspruch 1, wobei das Kontrollmodul (18) Verschlüsselungsmittel umfasst.

7. System nach Anspruch 1, wobei das Kontrollmodul (18) als Datenfiltertabelle konfiguriert ist.

8. System nach Anspruch 1, wobei die Protokolle, die in der Avionik-Domäne bzw. der offenen Domäne verwendet werden, verschieden sind und an der Sicherung des Datenaustauschs zwischen diesen zwei Domänen beteiligt sind.

9. System nach einem der vorhergehenden Ansprüche, wobei das Luftfahrzeug ein Flugzeug ist.

10. Luftfahrzeug, das ein System nach einem der Ansprüche 1 bis 8 verwendet.
